# EUROPÄISCHE PATENTSCHRIFT

(11) **EP 0 528 456 B1**
(45) Veröffentlichungstag und Bekanntmachung des Hinweises auf die Patenterteilung: **01.05.1996**
(21) Anmeldenummer: 92201987.2
(22) Anmeldetag: 22.06.1992
(51) Int. Cl.: C08J 9/33, C08J 11/06, C08L 75/04

(54) **Wiederverwertung duroplastischer PU-Schaumteile**
Recycling of duroplastic polyurethane foam articles
Recyclage d'articles à base de mousse polyuréthane duroplastique

(30) Priorität: 25.06.1991 IE 222191
(43) Veröffentlichungstag der Anmeldung: 24.02.1993
(73) Patentinhaber: HP-CHEMIE PELZER RESEARCH & DEVELOPMENT Ltd., Waterford, County Waterford (IE)
(72) Erfinder: Casey, John, Tramore, County Waterford (IE)
(74) Vertreter: Jönsson, Hans-Peter, Dr.

(56) Entgegenhaltungen:
- GB-A- 1 594 350
- US-A- 4 735 637

## Beschreibung

Die Erfindung betrifft ein Verfahren zur Wiederverwertung zerkleinerter duroplastischer Polyurethanschaumteile zur Herstellung neuer Halbzeuge oder Fertigartikel unter Verwendung eines unter die zerkleinerten Schaumteile gemischten Bindemittels.

Der Anteil in der Fahrzeugindustrie, besonders in der Kraftfahrzeugindustrie, aber auch in anderen Bereichen verwendeter aus Kunststoffschäumen und insbesondere aus duroplastischen Polyurethanschäumen bestehender Ausstattungsteile wie beispielsweise Formteile für Sitze, Kopfstützen, Armlehnen, usw. ist erheblich und führt als bei der Produktion und insbesondere beim Abwracken aus dem Verkehr gezogener Fahrzeuge anfallender Abfall vornehmlich zu überfüllten Deponien. Ihre Beseitigung durch Verbrennen scheidet wegen der dabei zu erwartenden Schadstoffemissionen als Möglichkeit aus.

Daher wird seit einiger Zeit die Wiederverwertung derartiger Kunststoffschaumabfälle angestrebt. Während bei der Verarbeitung thermoplastischer Kunststoffteile zu neuen Formteilen wesentliche technische Probleme nicht bestehen, scheiterte die Wiederverwertung der duroplastischen Anteile derartiger Abfälle an der Eigenschaft der Duroplaste, bei der Polykondensation zwar einen thermoplastischen, unter Anwendung von Wärme zur Formgebung nutzbaren Zustand zu durchlaufen, dabei jedoch unter räumlicher Vernetzungs auszuhärten, wonach sie durch Hitze nicht mehr erweichbar sind (s. beispielsweise "Schröter, Lautenschläger, Bibrack, TASCHENBUCH DER - CHEMIE", 10. Aufl. 1983 Verlag Harri Deutsch, Thun und Frankfurt/Main, S. 583).

Daher wird eine Form der Wiederverwertung duroplastischer Schäume, insbesondere duroplastischer Polyurethanschäume, praktiziert, bei der die anfallenden Teile zunächst zerkleinert werden. Die danach meist in Form von Schnitzeln oder Flocken vorliegenden Zerkleinerungsprodukte werden dann zusammen mit einem der an sich bekannten Bindemittel wie beispielsweise einem Polyurethan-Einkomponentenkleber, einem geeigneten Acrylat oder dergleichen unter Anwendung von Wärme und Druck zu neuen Formteilen, Matten, usw. geformt.

So ist beispielsweise aus der GB-A-1 594 350 ein Verfahren bekannt, bei dem ein zerkleinertes flexibles Polymer, beispielsweise Polyurethanschaumflocken, mit Phenolharz vermischt und unter Hitze verpreßt wird. Verschiedene Beimengungen wie beispielsweise natürliche und synthetische Textilfasern, Glas-, Baumwolle- oder Mineralfasern werden erwähnt.

Solche Verfahren können zu gut brauchbaren Artikeln führen, das Bindemittel stellt jedoch einen erheblichen Kostenfaktor dar. Außerdem ist in der Fachwelt die Ansicht verbreitet, daß die in zerkleinerter Form verwendeten Materialien durch solche Bindemittel in ihren Eigenschaften verändert werden. Daher wird in vielen Fällen auf die Verwendung von Teilen aus Recycling-Material verzichtet, die Schwierigkeiten, die aus der erheblichen Umweltbelastung durch die Beseitigung als Abfall entstehen, werden in Kauf genommen.

US-A-4 735 637 betrifft die Verarbeitung von mit Lösungsmitteln verarbeiteten Farben in Spritzkabinen und den dabei anfallenden Farbabfällen. Dabei wird mit Farbtröpfchen belandene Luft mit einer der Denaturierung dienenden Waschflüssigkeit in Kontakt gebracht, der als Additiv ein expandiertes polyurethanpulver beigegeben ist.

Nun wurde gefunden, daß sich ein vollständig auf Recycling-Material zurückgreifender Weg zur Wiederverwertung duroplastischer PU-Schaumabfälle zur Herstellung neuer ggf. erneut wiederverwertbarer Teile mit einer großen Variationsbreite der Eigenschaften ergibt, indem bestimmte Abfälle aus dem Lackierbetrieb mit dem duroplastischen Polyurethanabfall zusammen verarbeitet werden.

Der Erfindung liegt die technische Aufgabe zugrunde, einen einfachen und wenig kostenintensiven Weg zur kombinierten Wiederverwertung insbesondere duroplastischer Polyurethanschäume einerseits und als Sondermüll geltender Abfälle aus dem Lackierbetrieb andererseits aufzuzeigen, der zu hochwertigen Produkten mit großer Variationsbreite ihrer Eigenschaften führt. Diese Aufgabe wird bei einem Verfahren der eingangs beschriebenen Art dadurch gelöst, daß als Bindemittel eine der zerkleinerten Masse aus duroplastischem Polyurethanschaum beigemischte, aus Anteilen spezieller Polyesterharze (SPE) und Epoxydharze (EP) bestehende, Pulverlackmischungen aus Abfällen der Pulverlackierung verwendet wird und daß das fertige Gemenge in eine Form eingebracht und für eine Zeitdauer von ca. 3 s bis 300 s, insbesondere ca. 20 s bis 250 s bei Temperaturen zwischen ca. 70 - 80 °C und einem Wert im Bereich der Zersetzungstemperaturen, vorzugsweise einem Wert von ca. 160 °C bis ca. 250 °C und insbesondere von ca. 200 °C bis ca. 220 °C, unter Wärmeeinwirkung gehalten wird. Der Anteil der Pulverlackmischungen kann - auf das Gewicht bezogen - zwischen ca. 10% und ca. 40% liegen, wobei Anteile zwischen ca. 16 - 20% und 28 - 35%, insbesondere zwischen ca. 20% und 30%, bevorzugt werden. Die Höhe des Anteils der Pulverlackmischung hat sich dabei als ein wesentlicher Faktor zur Beeinflussung der Materialeigenschaften, insbesondere der Festigkeitseigenschaften sowie der Oberflächengüte des Endproduktes erwiesen.

Durch die Auswahl von Temperatur und Einwirkungszeit kann dabei festgelegt werden, ob das Lackgemisch thermoplastisch bleibt oder zu einem Duroplast aushärtet. Wird als Einwirkungstemperatur ein Wert zwischen ca. 60 - 80 °C und ca. 130 °C bei einer Einwirkungsdauer zwischen ca. 180 s und 25 s gewählt, so bleibt das als Binder verwendete Lackpulvergemisch thermoplastisch; eine Einwirkungstemperatur ab einem Wert zwischen ca. 145 °C und ca. 165 - 170 °C bei einer Einwirkungsdauer zwischen ca. 15 s und 250 s, insbesondere eine Temperatur von ca. 160 °C und 180 °C bei einer Dauer von ca. 5 s bis 180 s, führt zur mindestens teilweisen Vernetzung des Lackpulvers zur duroplastischen Form. Die Wärmeeinwirkung kann in an sich bekannter Weise durch Beheizen der Form, durch Einleitung eines heißen Gases, beispielsweise Luft oder Wasserdampf, in die Form oder durch die Kombination beider Maßnahmen erfolgen. Es ist jedoch auch möglich, den Rohformling zunächst außerhalb der Form - etwa durch ein heißes Gas - auf eine erhöhte Temperatur von beispielsweise ca. 200 °C, ggf. auch bis 220 °C aufzuheizen und unmittelbar danach in die kalte bzw. unbeheizte Form einzulegen, um ihn in die gewünschte Gestalt zu bringen.

Vorteilhaft wird der (im thermoplastischen Bereich) mit einer Temperatur zwischen ca. 60 - 80 °C und ca. 130 °C bei einer - von der angewandten Temperatur beeinflußten - Einwirkungsdauer zwischen ca.100 - 180 s und 25 s entstandene Formling nach Beendigung der Wärmeeinwirkung bis zur Abkühlung auf eine Temperatur unterhalb ca. 80 °C in der Form gehalten. Insbesondere nach Behandlung im duroplastischen Bereich kann es jedoch zweckmäßig sein, den Formling unmittelbar nach Beendigung der Wärmeeinwirkung aus der Form zu entnehmen und abzukühlen. Bei einer besonderen Ausbildungsform der Erfindung können die Formzeiten, das ist die Zeit, während der dem Formling in der Form Wärme zugeführt werden muß, erheblich verringert werden, indem in das aus einem SPE/EP-Pulverlackgemisch bestehende Bindemittel 2% bis zu 10 - 15% Phenolharzpulver, bezogen auf das SPE/EP-Gemisch, eingemischt werden. Eine derartige Maßnahme führt zugleich zu einer stärker ausgeprägten Vernetzung des als Binder zugesetzten Lackgemisches.

Bei einer besonderen Weiterbildungsform können einzelne Bereiche der Oberfläche des Formlings oder die gesamte Oberfläche dadurch eine besonders glatte und geschlossene Form erhalten, daß die Wände der Form insgesamt oder in den Bereichen, die eine solche geschlossene Oberfläche aufweisen sollen, vorzugsweise am Ende der Aufheizzeit kurzzeitig auf eine Temperatur gebracht werden, die zwischen 220 °C und 340 °C liegt. Bevorzugt liegt die Temperatur der kurzzeitige Erhitzung zwischen 280 °C und 320 °C.

Insgesamt hat sich als vorteilhaft erwiesen, wenn die Komprimierung des Formlings bis zu einem Raumgewicht erfolgt, das mindestens 5% bis 10% über dem der eingesetzten Polyurethanschaumteile liegt und - abhängig von dem Ausgangsprodukt, der gewünschten Stabilität, der erwünschten akustischen Qualität bzw. Wirksamkeit und/oder dem angestrebten Gewicht - bis zu 50% über dem Ausgangswert liegen kann.

In Weiterbildung der Erfindung können die, wie vorhergehend beschrieben, erzeugten Teile einseitig oder beidseitig mit einem Vlies, einem Gewirke oder Gewebe oder mit einem anderen haltbar aufgebrachten Flächengebilde kaschiert werden. Dies kann - in Verbindung mit der Formung - durch die zum Formen des zu kaschierenden Teils eingeleitete Wärme, ggf. durch Ausnutzung der Wirkung des beigemengten Lackpulvergemisches, vorgenommen werden oder auch nach dem Ausformen erfolgen. Ebenso kann - in der Form oder bei dem ausgeformten Teil - die Verbindung zwischen Formteil und Flächengebilde(n) durch ein an sich bekanntes weiteres Bindemittel geschehen.

Der Erläuterung der Erfindung dienen die folgenden Beispiele.

### BEISPIEL 1

Schaumabfälle aus duroplastischem Polyurethan mit einem mittleren Raumgewicht von 40 kg/m³ wurden auf eine Korngröße der Flocken von 6 mm φ zerkleinert. Als Binder wurde der PES-EP-Pulverlackabfall in einem aerodynamischen Verfahren in einer Menge von 20 bis 30 Gewichts-% beigemischt.

Die Flocken wurden in eine auf 180 °C aufgeheizte Form lose eingebracht, auf ein Raumgewicht von 120 kg/m³ verdichtet und 2 min unter diesen Bedingungen gehalten. Der danach entnommene Formling zeigte eine durchgehend zusammenhängende Oberfläche und hohe Elastizität bei weitgehender Erhaltung der Porenstruktur.

### BEISPIEL 2

Das Zerkleinerungsprodukt aus mit SPE-EP-Pulverlackabfall versetzten Flokken gemäß Beispiel 1 wurde zur Herstellung einer Verbindung zwischen den Flocken zwischen zwei Platten zu einem Flächengebilde von 30 mm Dicke und 100 kg/m³ Raumgewicht zusammengedrückt und in diesem Zustand 15 s lang mit durch die Flockenansammlung geblasener Heißluft von 200 °C behandelt. Nach der Abkühlung wurde das entstehende plattenförmige Gebilde in eine auf 180 °C vorgeheizte geschlossene Form eingelegt und bis zu einer Dicke von 3 mm und einem Flächengewicht von 3 kg/m weiter verdichtet. Die entstehende Platte zeigte praktisch keine Porenstruktur mehr, ihre Oberfläche war geschlossen. Das entstandene Gebilde war für Schallschutzmaßnahmen als Schwerschicht geeignet.

### BEISPIEL 3

Die als Endprodukt aus Beispiel 2 vorliegende Platte wurde in eine 3D-Preßform eingelegt und bei einer Temperatur von 200 °C verformt und für die Zeit von 2 min in der heißen Preßform gehalten. Es entstand ein für Lärmschutzzwecke in Fahrzeugen verwendbares Gebilde.

### BEISPIEL 4

Das Zerkleinerungsprodukt aus mit SPE-EP-Pulverlackabfall versetzten Flokken gemäß Beispiel 1 wurde in eine auf eine Temperatur von 200 °C aufgeheizte Form eingefüllt, deren Boden vorher mit einem netzförmigen PES-Gewirke ausgelegt worden war, und nach Komprimierung auf ca. 65% seines Ausgangsvolumens 3 min in der Form gehalten. Bei dem fertigen Formling war das PES-Gewirke dauerhaft mit dem Formling verbunden.

### BEISPIEL 5

Schaumabfälle aus duroplastischem Polyurethan mit einem mittleren Raumgewicht von 40 kg/m³ wurden auf eine Korngröße der Flocken von 15 mm φ zerkleinert und mit dem SPE-EP-Pulverlackabfall in einer Menge von 20 bis 30 Gewichts-% als Binder in einem aerodynamischen Verfahren vermischt. Die Flocken wurden in die auf 180 °C erhitzte Form eingefüllt und 30 s lang unter Zusammendrücken auf eine Dicke von 10 mm und 100 kg/m³ Raumgewicht mit Heißluft von 250 °C behandelt, wobei sie sich miteinander verbanden. Die entstandene Matte wurde zusammen mit dem plattenförmigen Gebilde aus Beispiel 2 in einer auf 200 °C aufgeheizten Form zu einem 3-D-Formteil geformt und 2 min auf Temperatur gehalten. Das entstandene Gebilde war ein zu Lärmschutzzwecken in Fahrzeugen verwendbares, akustisch wirksames Feder-Masse-System.

### BEISPIEL 6

Das Zerkleinerungsprodukt aus mit SPE-EP-Pulverlackabfall versetzten Flokken gemäß Beispiel 1 wurde mit 30% Faserabfällen vermischt, ohne Beigabe weiterer Bindemittel in eine auf 200 °C gebrachte 3-D-Form gefüllt und nach dem Zusammenpressen auf ca. 60 % des Ausgangsraumgewichtes für 2 min in der Form gehalten. Der Formling ließ eine gute, die Festigkeitseigenschaften deutlich verbessernde Verbindung zwischen Flocken und Fasern erkennen.

### BEISPIEL 7

Schaumabfälle aus duroplastischem Polyurethan mit einer Korngröße von 10 - 15 mm φ mit einem mittleren Raumgewicht von 40 kg/m³ wurden in mehreren Versuchen mit unterschiedlichem SPE-EP-Pulverlackabfall zwischen 10 und 40 Gew.-% versetzt. Die jeweiligen Mischungen wurden gemäß Beispiel 2 zu Platten geformt und entsprechend Beispiel 3 in 3D-Formen behandelt.

Die Festigkeiteigenschaften der der Form entnommenen Formlinge waren in erheblichem Maße von der prozentualen Menge des untergemischten SPE-EP-Pulverlackabfalls abhängig, wobei der Formling mit 10% Harzbeimischung eine rel. wenig verfestigte Oberfläche zeigte, während der Formling mit 40% Harzpulverbeimischung bei glatter, geschlossener Oberfläche erhebliche Elastizität und Biegefestigkeit zeigte.

Bei der Entsorgung der Ausrüstungsteile zu verschrottender Kraftfahrzeuge fallen auch Hartschaum-Teile aus duroplastischem Polyurethan an, welche Raumgewichte ab ca. 25 bis zu ca. 1.250 kg/m³, insbesondere Raumgewichte zwischen ca. 60 und 400 kg/m³ aufweisen können. Auch diese haben sich als zur erfindungsgemäßen Wiederverwertung gut geeignet erwiesen, wobei auch Teile mit Glasfaserverstärkung ohne Schwierigkeiten verarbeitet werden konnten (s. das folgende Beispiel).

### BEISPIEL 8

Schaumabfälle aus duroplastischen Polyurethan-Hartschaumteilen mit einem mittleren Raumgewicht von ca. 360 kg/m³ wurden auf eine Korngröße der Flocken von 4 - 6 mm φ mit einem mittleren Raumgewicht von ca. 80 kg/m³ aufgemahlen. Als Binder wurde der SPE-EP-Pulverlackabfall in einem aerodynamischen Verfahren in einer Menge von 15 bis 25 Gewichts-% beigemischt.

Die Flocken wurden lose in eine auf 170 °C aufgeheizte Form gefüllt, auf ein Raumgewicht von ca. 450 kg/m³ verdichtet und 3 min unter diesen Bedingungen gehalten. Am Ende der Aufheizzeit wurde vor der Ausformung die Sichtfläche des Formlings kurzzeitig auf eine Temperatur von ca. 295 °C gebracht. Der danach entnommene Formling war rel. hart und elastisch und zeigte eine durchgehend zusammenhängende Oberfläche, die auf der Sichtseite von besonders ausgeprägter Glätte war. Die Porenstruktur war praktisch verschwunden.

## Patentansprüche

1. Verfahren zur Wiederverwertung zerkleinerter duroplastischer Polyurethanschaumteile zur Herstellung neuer Halbzeuge oder Fertigartikel unter Verwendung eines unter die zerkleinerten Schaumteile gemischten, aus Epoxy- und/oder anderen Harzen bestehenden Bindemittels ,
**dadurch gekennzeichnet, daß**
als Bindemittel eine der zerkleinerten Masse aus duroplastischem Polyurethanschaum beigemischte, aus SPE und EP-Anteilen bestehende Pulverlackmischungen aus Abfällen der Pulverlackierung verwendet wird und daß das fertige Gemenge in eine Form eingebracht und für eine Zeitdauer von 3 bis 300 s, insbesondere 20 s bis 250 s bei Temperaturen zwischen 70 - 80 °C und einem Wert im Bereich der Zersetzungstemperaturen, vorzugsweise einem Wert von 160 °C bis 250 °C und insbesondere von 200 °C bis 220 °C, unter Wärmeeinwirkung gehalten wird.

2. Verfahren nach Anspruch 1,
**dadurch gekennzeichnet, daß**
die Pulverlackmischung in einer Menge von ca. 10 bis 40 Gewichts-%, vorzugsweise zwischen 16 - 20 und 28 - 35 Gewichts-%, bezogen auf die zerkleinerte Masse aus duroplastischem Polyurethanschaum, beigemischt wird.

3. Verfahren nach Anspruch 1 oder 2,
dadurch gekennzeichnet, daß
als Einwirkungstemperatur ein Wert zwischen ca. 60 - 80 °C und ca. 130 °C bei einer Einwirkungsdauer zwischen ca. 180 s, bevorzugt 100 s und 25 s gewählt wird.

4. Verfahren nach Anspruch 1 oder 2,
**dadurch gekennzeichnet, daß**
als Einwirkungstemperatur ein Wert zwischen ca. 145 °C und ca. 165 - 170 °C bei einer Einwirkungsdauer zwischen ca. 15 s und 250 s gewählt wird.

5. Verfahren nach Anspruch 1 oder 2,
**dadurch gekennzeichnet, daß**
als Einwirkungstemperatur ein Wert zwischen ca. 160 °C und ca. 180 °C bei einer Einwirkungsdauer zwischen ca. 5 s und 180 s gewählt wird.

6. Verfahren nach einem der vorhergehenden Ansprüche,
**dadurch gekennzeichnet, daß**
der Formling nach Beendigung der Wärmeeinwirkung bis zur Abkühlung auf eine Temperatur unterhalb ca. 80 °C in der Form gehalten wird.

7. Verfahren nach einem der Ansprüche 1 bis 5,
**dadurch gekennzeichnet, daß**
der Formling unmittelbar nach Beendigung der Wärmeeinwirkung aus der Form entnommen wird.

8. Verfahren nach Anspruch 1 oder 2 in Verbindung mit einem der Ansprüche 3 bis 7,
**dadurch gekennzeichnet, daß**
der Rohformling auf ca. 200 °C bis 220 °C erhitzt, unmittelbar anschließend zum Formen in eine kalte bzw. unbeheizte Form eingelegt und nach einer Zeitdauer von ggf. ca. 25 s bis 100 s ausgeformt wird.

9. Verfahren nach einem der vorangehenden Ansprüche, insbesondere nach Anspruch 4 oder 5,
**dadurch gekennzeichnet, daß**
in das aus einem SPE/EP-Pulverlackgemisch bestehende Bindemittel, bezogen auf das SPE/EP-Gemisch, ca. 2% bis ca. 10% Phenolharzpulver eingemischt werden.

10. Verfahren nach einem der vorangehenden Ansprüche,
**dadurch gekennzeichnet, daß**
in die zerkleinerte Masse aus duroplastischem Polyurethanschaum, vorzugsweise vor der Zugabe des Pulverlackgemisches, textile oder andere faserförmige Bestandteile zur Erhöhung der mechanischen Festigkeit eingemischt werden.

11. Verfahren nach einem der vorhergehenden Ansprüche,
**dadurch gekennzeichnet, daß**
die Formlinge durch Beheizung der Form oder/und durch Einleitung eines heißen Gases aufgeheizt werden.

12. Verfahren nach einem der vorhergehenden Ansprüche,
**dadurch gekennzeichnet, daß**
die Wände der Form insgesamt oder in den Bereichen, in denen der Formling eine besonders glatte, geschlossene Oberfläche aufweisen soll, vorzugsweise am Ende der Aufheizzeit kurzzeitig auf eine Temperatur gebracht werden, die zwischen ca. 220 °C und ca 340 °C liegt.

13. Verfahren nach Anspruch 12,
**dadurch gekennzeichnet, daß**
die Temperatur für die kurzzeitige Erhitzung zwischen ca. 280 °C und ca 320 °C festgelegt wird.

14. Verfahren nach einem der vorhergehenden Ansprüche,
**dadurch gekennzeichnet, daß**
die Komprimierung der in die Form verbrachten Füllung bis zu einem Raumgewicht erfolgt, das mindestens ca. 5% bis 10% über dem der eingesetzten Polyurethanschaumteile liegt.

15. Verfahren nach einem der vorhergehenden Ansprüche,
**dadurch gekennzeichnet, daß**
auf den aus mit einem SPE-EP-Pulverlackgemisch versetzten Polyurethanschaumflocken erzeugten Formling einseitig oder beidseitig ein Vlies, ein Gewirke oder Gewebe oder ein anderes Flächengebilde aufgebracht und mit dem Formling haltbar verbunden wird.

16. Verfahren nach Anspruch 15,
**dadurch gekennzeichnet, daß**
das Aufbringen und Verbinden bei dem Formen vorgenommen wird.

17. Verfahren nach Anspruch 15,
**dadurch gekennzeichnet, daß**
das Aufbringen und Verbinden im Anschluß an das Ausformen vorgenommen wird.

18. Verfahren nach einem der Ansprüche 15 bis 17,
**dadurch gekennzeichnet, daß**
die Verbindung zwischen Formteil und Flächengebilde(n) durch den SPE-EP-Lackpulveranteil und die zum Formen des zu kaschierenden Teils eingeleitete Wärme erfolgt.

19. Verfahren nach einem der Ansprüche 15 bis 17,
**dadurch gekennzeichnet, daß**
zur Herstellung der Verbindung zwischen Formteil und Flächengebilde(n) ein an sich bekanntes Bindemittel verwendet wird.

## Claims

1. A process for recycling comminuted parts of thermosetting polyurethane foam for the preparation of new semifinished or finished products using a binder consisting of epoxy and/or other resins which is added to the comminuted foam parts, characterized in that powder coating mixtures consisting of SPE and EP components from powder coating waste which are added to the comminuted material of thermosetting polyurethane foam are used as said binder and that the finished mixture is charged in a mold and maintained under the action of heat for a period of time of from 3 s to 300 s, especially from 20 s to 250 s, at temperatures of between 70-80°C and a value in the range of the corresponding decomposition temperatures, preferably at from 160°C to 250°C, and especially from 200°C to 220°C.

2. The process according to claim 1, characterized in that said powder coating mixture is added in an amount of about 10 to 40% by weight, preferably between 16-20 and 28-35% by weight, based on the comminuted material of thermosetting polyurethane foam.

3. The process according to claim 1 or 2, characterized in that a value between about 60-80°C and about 130°C is selected as the temperature of heat action with the time of action ranging between about 180 s, preferably 100 s, and 25 s.

4. The process according to claim 1 or 2, characterized in that a value between about 145°C and about 165-170°C is selected as the temperature of heat action with the time of action ranging between about 15 s and 250 s.

5. The process according to claim 1 or 2, characterized in that a value between about 160°C and about 180°C is selected as the temperature of heat action with the time of action ranging between about 5 s and 180 s.

6. The process according to any of the preceding claims, characterized in that after completion of the action of heat the molded part is kept in the mold until it has cooled to a temperature below about 80°C.

7. The process according to any of claims 1 to 5, characterized in that immediately after completion of the action of heat the molded part is removed from the mold.

8. The process according to claim 1 or 2 in connection with any of claims 3 to 7, characterized in that the crude molded part is heated to about 200°C to 220°C, inserted immediately thereafter in a cold or unheated mold for molding and subjected to final molding, optionally after a period of time of about 25 s to 100 s.

9. The process according to any of the preceding claims, especially claim 4 or 5, characterized in that from about 2% to about 10% of phenolic resin powder, based on the SPE/EP mixture, is mixed into said binder consisting of an SPE/EP powder coating mixture.

10. The process according to any of the preceding claims, characterized in that textile or other fibrous components are mixed into said comminuted material of thermosetting polyurethane foam, preferably before adding said powder coating mixture, to increase its mechanical strength.

11. The process according to any of the preceding claims, characterized in that the molded parts are heated by heating the mold and/or by introducing a hot gas.

12. The process according to any of the preceding claims, characterized in that the walls of said mold in their entirety or in those areas where the molded part is to have a particular smooth and closed surface are brought to a temperature ranging between about 220°C and about 340°C for a short period of time, preferably at the end of the heating period.

13. The process according to claim 12, characterized in that the temperature for said short heating is set to between about 280°C and about 320°C.

14. The process according to any of the preceding claims, characterized in that compressing of the filling charged in the mold is performed to a density of foam which exceeds that of the polyurethane foam parts employed by at least about 5% to 10%.

15. The process according to any of the preceding claims, characterized in that a non-woven, knitted or woven fabric or another two-dimensional structure is applied to one side or both sides of the molded part produced from polyurethane foam flakes added with an SPE/EP powder coating mixture and is durably bonded to said molded part.

16. The process according to claim 15, characterized in that said applying and bonding is performed during the molding process.

17. The process according to claim 15, characterized in that said applying and bonding is performed subsequent to final molding.

18. The process according to any of claims 15 to 17, characterized in that said bonding between the molded part and the two-dimensional structure(s) is accomplished through said SPE/EP powder coating component and the heat supplied for molding the part to be backed.

19. The process according to any of claims 15 to 17, characterized in that a per se known binder is used for achieving said bonding between the molded part and the two-dimensional structure(s).

## Revendications

1. Procédé de recyclage d'articles à base de mousse polyuréthane thermodurcissables broyés pour la fabrication de nouveaux produits demi-finis ou d'articles finis en utilisant un liant constitué par de la résine époxy et/ou d'autres résines, mélangé aux articles de mousse broyés,
**caractérisé en ce**
qu'on utilise comme liant un mélange de laque en poudre constitué par des parties en résines de polyester et époxy provenant de déchets du laquage en poudre, mélangé à la masse broyée de mousse polyuréthane thermodurcissable et que le mélange fini est mis en place dans un moule et est maintenu sous l'effet de la chaleur pour une durée de 3 à 300 s, en particulier de 20 à 250 s, à des températures entre 70 à 80° C et une valeur dans la plage des températures de décomposition, de préférence à une valeur de 160° C à 250° C, et en particulier de 200° C à 220° C.

2. Procédé selon la revendication 1,
**caractérisé en ce**
que le mélange de laque en poudre est mélangé dans une quantité d'environ 10 à 40 % en poids, de préférence entre 16 à 20 et 28 à 35 % en poids, par rapport à la masse broyée de mousse polyuréthane thermodurcissable.

3. Procédé selon la revendication 1 ou 2,
**caractérisé en ce**
que comme température d'action une valeur est sélectionnée entre environ 60 à 80° C et environ 130° C pour une durée d'action entre environ 180 s, de préférence 100 s, et 25 s.

4. Procédé selon la revendication 1 ou 2,
**caractérisé en ce**
que comme température d'action une valeur est sélectionnée entre environ 145° C et environ 165 à 170° C pour une durée d'action entre environ 15 s et 250 s.

5. Procédé selon la revendication 1 ou 2,
**caractérisé en ce**
que comme température d'action une valeur est sélectionnée entre environ 160° C et environ 180° C pour une durée d'action entre environ 5 s et 180 s.

6. Procédé selon l'une des revendications précédentes,
**caractérisé en ce**
que la pièce moulée est maintenue dans le moule après que l'action de la chaleur ait pris fin jusqu'au refroidissement à une température au-dessous d'environ 80° C.

7. Procédé selon l'une des revendications 1 à 5,
**caractérisé en ce**
que la pièce moulée est enlevée du moule immédiatement après que l'action de la chaleur ait pris fin.

8. Procédé selon la revendication 1 ou 2 en relation avec l'une des revendications 3 à 7,
**caractérisé en ce**
que la pièce moulée brute est réchauffée à environ 200° C à 220° C, est immédiatement ensuite mise en place pour le moulage dans un moule froid ou non chauffé et est démoulée après une durée d'éventuellement environ 25 s à 100 s.

9. Procédé selon l'une des revendications précédentes, en particulier selon la revendication 4 ou 5,
**caractérisé en ce**
qu'environ 2 % à environ 10 % de poudre de résine phénolique sont mélangés au liant constitué par un mélange de laque en poudre de résines de polyester/époxy, par rapport au mélange de résines de polyester/époxy.

10. Procédé selon l'une des revendications précédentes,
**caractérisé en ce**
que des constituants textiles ou d'autres constituants fibreux sont mélangés à la masse broyée de mousse polyuréthane thermodurcissable, de préférence avant l'addition du mélange de laque en poudre, pour augmenter la résistance mécanique.

11. Procédé selon l'une des revendications précédentes,
**caractérisé en ce**
que les pièces moulées sont réchauffées par chauffage du moule et/ou par introduction d'un gaz chaud.

12. Procédé selon l'une des revendications précédentes,
**caractérisé en ce**
que les parois du moule en totalité ou dans les zones dans lesquelles la pièce moulée doit présenter une surface fermée, particulièrement lisse, sont amenées, de préférence à la fin du temps d'échauffement, momentanément à une température qui se situe entre environ 220° C et environ 340° C.

13. Procédé selon la revendication 12,
**caractérisé en ce**
que la température pour le réchauffement momentané est fixée entre environ 280° C et environ 320° C.

14. Procédé selon l'une des revendications précédentes,
**caractérisé en ce**
que la compression du remplissage amené dans le moule se fait jusqu'à un poids spécifique qui se situe au moins environ 5% à 10% au-dessus de celui des parties de mousse polyuréthane utilisées.

15. Procédé selon l'une des revendications précédentes,
**caractérisé en ce**
qu'un non-tissé, un tricotage, un tissu ou une autre structure étendue est appliquée sur un côté ou des deux côtés sur la pièce moulée fabriquée à partir de flocons de mousse polyuréthane mélangés à un mélange de laque en poudre de résines de polyester/époxy et est relié de manière durable à la pièce moulée.

16. Procédé selon la revendication 15,
**caractérisé en ce**
que l'application et la jonction sont effectuées lors du moulage.

17. Procédé selon la revendication 15,
**caractérisé en ce**
que l'application et la jonction sont effectuées en faisant suite au démoulage.

18. Procédé selon l'une des revendications 15 à 17,
**caractérisé en ce**
que la jonction entre la pièce moulée et la(les) structure(s) étendue(s) se fait par la partie de poudre de laque de résines de polyester/époxy et la chaleur introduite pour mouler la pièce à contrecoller.

19. Procédé selon l'une des revendications 15 à 17,
**caractérisé en ce**
que, pour réaliser la jonction entre la pièce moulée et la(les) structure(s) étendue(s), on utilise un liant connu en soi.
